# EUROPÄISCHE PATENTSCHRIFT

(11) **EP 4 169 746 B1**
(45) Veröffentlichungstag und Bekanntmachung des Hinweises auf die Patenterteilung: **11.12.2024**
(21) Anmeldenummer: 22200553.0
(22) Anmeldetag: 10.10.2022
(51) Int. Cl.: B60C 29/06, B29C 73/16, B60S 5/04, F16K 15/20

(54) **VORRICHTUNG ZUR REGULIERUNG DER DRUCKLUFT IN EINEM FAHRZEUGREIFEN, PANNENHILFESET UMFASSEND EINE SOLCHE VORRICHTUNG UND VERFAHREN ZUR REGULIERUNG DER DRUCKLUFT IN EINEM FAHRZEUGREIFEN MIT EINER SOLCHEN VORRICHTUNG**
DEVICE FOR REGULATING THE PRESSURE AIR IN A VEHICLE TYRE, TYRE REPAIR-SET COMPRISING SUCH A DEVICE AND METHOD FOR REGULATING THE PRESSURE AIR IN A VEHICLE TYRE
DISPOSITIF DE RÉGULATION DE L'AIR COMPRIMÉ DANS UN PNEU DE VÉHICULE, ENSEMBLE D'AIDE À LA CREVAISON COMPRENANT UN TEL DISPOSITIF ET PROCÉDÉ DE RÉGULATION DE L'AIR COMPRIMÉ DANS UN PNEU DE VÉHICULE

(30) Priorität: 19.10.2021 DE 102021211789
(43) Veröffentlichungstag der Anmeldung: 26.04.2023
(73) Patentinhaber: Continental Reifen Deutschland GmbH, 30175 Hannover (DE)
(72) Erfinder: Schlosser, Florian, 30165 Hannover (DE); Detering, Rainer, 30165 Hannover (DE)
(74) Vertreter: Continental Corporation

(56) Entgegenhaltungen:
- DE-A1- 102015 220 060
- JP-A- 2007 182 036
- US-A- 5 070 917

## Beschreibung

Die Erfindung betrifft eine Vorrichtung zur Regulierung der Druckluft in einem Fahrzeugreifen gemäß dem Oberbegriff des Patentanspruchs 1, ein Pannenhilfeset zum Abdichten und Aufpumpen von Fahrzeugreifen gemäß dem Oberbegriff des Patentanspruchs 9 und ein Verfahren zum Regulieren der Druckluft in einem Fahrzeugreifen mit einer solchen Vorrichtung und/oder eines solchen Pannenhilfesets gemäß dem Oberbegriff des Patentanspruchs 10.

Pannenhilfesets oder Pannenhilfekits sind im Stand der Technik bekannt und werden üblicherweise eingesetzt, um das Pannenhilfeset über einen Schlauch mit dem Fahrzeugreifen beziehungsweise dem Ventil des Reifens zu verbinden. Ein Pannenhilfeset umfasst üblicherweise einen Kompressor zur Erzeugung von Druckluft, durch die ein Dichtmittel zum Abdichten eines Fahrzeugreifens im Falle einer Panne in den Fahrzeugreifen gepumpt wird und/oder den Fahrzeugreifen nach dem Abdichten mit Luft zu befüllen.

Ablassventile in Pannenhilfesets sind beispielsweise aus der EP3383630 bekannt. Ein solches Pannenhilfeset weist ein betätigbares Druckablassventil zur Verringerung des Reifendrucks auf, wobei das Druckablassventil so ausgebildet ist, dass bei angeschlossenem Dichtmittelbehälter und/oder während der Förderung von Dichtmittel aus dem Dichtmittelbehälter in den Reifen eine Betätigung bzw. ein Ablassen des Drucks verhindert ist.

Die JP 2007182036A offenbart beispielsweise einen Verbinder und einen Verbindersatzes, der die erforderlichen Funktionen besitzt und kostengünstig hergestellt werden kann.

Ferner beschreibt die US5070917A eine kompakte Vorrichtung zum abgedichteten Speichern und anschließenden Abgeben einer vorgegebenen Lademenge einer Reifendichtflüssigkeit in das Innere eines Reifens umfassend ein hohles Flüssigkeitsspeicher- und -übertragungselement mit einem Einlassanschluss und einem Auslassanschluss, in dem die Dichtflüssigkeit angeordnet ist.

Die DE102015220060A1 offenbart ein Reifenanschlussventil als Verbindungselement zwischen einem Füllschlauch eines Pannensets und einem Reifenventil eines Reifens, wobei das Reifenanschlussventil durch einen federbelasteten Ventilkörper selbstschließend ausgebildet ist und der Ventilkörper durch das Aufbringen des Reifenanschlussventils auf das Reifenventil geöffnet wird und eine in seinem inneren und für Luft und/oder Dichtmittel vorgesehenen Durchtrittsquerschnitt angeordnete Ringdichtung enthält, die a) in Strömungsrichtung ausgangsseitig eine Dichtfläche zur stirnseitigen Abdichtung des eingeschraubten Reifenventils aufweist, b) auf ihrem Außenumfang und in Strömungsrichtung eingangsseitig Dichtflächen aufweist zur Abdichtung der Rändelmutter gegenüber dem Endstück des Füllschlauches, und c) auf ihrem Innenumfang und in Strömungsrichtung eingangsseitig Dicht- und Anlageflächen zur Anlage des federbelasten Ventilkörpers aufweist.

Derzeitige Entwicklungen von Pannenhilfesets führen zu immer kleineren Bauteilen, weshalb funktionelle Elemente, wie beispielsweise ein Ablassventil, am Pannenhilfeset mit anderen Elementen zusammengeführt oder anders angeordnet und/oder ausgebildet werden müssen, wobei die Funktionsfähigkeit des Pannenhilfesets für den Verbraucher weiterhin gegeben sein sollte.

Hier setzt die vorliegende Erfindung an. Es ist die Aufgabe der Erfindung eine Vorrichtung bereitzustellen, durch die die Regulierung der Druckluft vereinfacht wird. Ferner ist es die Aufgabe der Erfindung ein Pannenhilfeset bereitzustellen, durch das die Benutzung für den Benutzer vereinfacht und welches insbesondere in Bezug auf die Druckluftregulierung verbessert wird. Außerdem ist es die Aufgabe der Erfindung ein Verfahren bereitzustellen, durch das der Benutzer einfacher die Druckluft in einem Fahrzeugreifen regulieren kann.

Die Aufgabe der vorliegenden Erfindung wird durch eine Vorrichtung zur Regulierung der Druckluft in einem Fahrzeugreifen mit den Merkmalen des Patentanspruchs 1 gelöst. Ferner wird die Aufgabe der Erfindung durch ein Pannenhilfeset zum Abdichten und Aufpumpen von Fahrzeugreifen mit den Merkmalen des Patentanspruchs 9 und durch ein Verfahren zum Regulieren der Druckluft in einem Fahrzeugreifen mit einer solchen Vorrichtung und/oder eines solchen Pannenhilfesets mit den Merkmalen des Patentanspruchs 10 gelöst.

Gelöst wird die Aufgabe durch eine Vorrichtung zur Regulierung der Druckluft in einem Fahrzeugreifen nach Anspruch 1.

Ein wesentlicher Vorteil der erfindungsgemäßen Vorrichtung ist, dass diese beliebig oft zwischen einem Fahrzeugreifen und einem Pannenhilfeset einsetzbar ist, um die Druckluft im Fahrzeugreifen zu regulieren. Üblicherweise wird der Druck im Fahrzeugreifen durch einen Kompressor im Pannenhilfeset aufgebaut und durch die Druckablasseinrichtung bei zu hohem Druck verringert. Im Gegensatz zur Dichtmittelflasche und in vielen Fällen auch zum Pannenhilfeset muss die erfindungsgemäße Vorrichtung nach der Benutzung nicht ausgetauscht werden. Dies ist auch aus ökologischer Sicht vorteilhaft. Ferner ist es vorteilhaft, da das Pannenhilfeset deutlich kleiner ausgestaltet werden kann, wodurch sich auch die Produktionskosten insgesamt senken lassen.

In einer bevorzugten Ausführungsform der Erfindung umfasst die mindestens eine Druckablasseinrichtung ein Druckablassventil. Das Druckablassventil ist vorteilhafterweise so ausgebildet, dass durch dieses zwei Zustände einnehmen kann, nämlich das Luft ausströmbar und durch die Vorrichtung strömbar ist.

In einer weiteren bevorzugten Ausführungsform der Erfindung weist die Druckablasseinrichtung mindestens ein Druckelement auf, durch welches die Druckluft manuell regulierbar ist. In einer besonders bevorzugten Ausgestaltung ist das Druckelement einen Druckknopf. Ein wesentlicher Vorteil für den Benutzer ergibt sich daraus, dass über das Druckelement bzw. den Druckknopf die Druckluft beliebig oft und einfach regulierbar ist.

Weiterhin bevorzugt ist der erste Anschluss so ausgebildet, dass dieser mit einem Reifenventil des Fahrzeugreifens verbindbar ist. Dazu ist denkbar, dass das Reifenventil üblicherweise ein Gewinde aufweist, wobei dieses in den zweiten Anschluss eindrehbar ist. Der erste Anschluss ist dabei so ausgebildet, dass das Reifenventil wieder lösbar ist. Andere Verbindungstypen sind ebenfalls denkbar. Beispielsweise könnte das Reifenventil in den ersten Anschluss einsteckbar sein und insbesondere durch eine Einrastfunktion lösbar mit der Vorrichtung verbunden sein. Vorteilhaft ist, dass der Benutzer die Vorrichtung einfach mit dem Reifenventil verbinden und wieder lösen kann.

Ferner bevorzugt ist der zweite Anschluss so ausgebildet, dass dieser mit einem Reifenverbinder oder einem Schlauch eines Pannenhilfesets verbindbar ist. Dafür ist der erste Anschluss beispielsweise ein Gewinde oder eine Steckvorrichtung, womit der erste Anschluss mit einem Reifenverbinder oder einem Schlauch lösbar verbindbar ist.

In einer weiteren bevorzugten Ausführungsform der Erfindung ist die Vorrichtung wiederverwendbar. Die Vorrichtung ist damit vorteilhafterweise für unterschiedliche Pannenhilfesets einsetzbar, sodass die Vorrichtung nicht ausgetauscht werden muss.

Ferner bevorzugt umfasst der Grundkörper Kunststoff oder besteht aus diesem. Der Grundkörper ist aus Kunststoff einfach herstellbar. Es hat sich gezeigt, dass besonders bevorzugt Polyamid, ganz besonders bevorzugt Polyamid 66 und/oder Polyamid 6, dafür geeignet ist, da diese vorteilhafterweise formstabil ist. Es ist sogar denkbar, dass die gesamte Vorrichtung, nämlich auch die Druckablasseinrichtung aus Kunststoff besteht.

Außerdem kann der Kunststoff faserverstärkt, insbesondere glasfaserverstärkt, sein. Denkbar ist dazu beispielsweise ein glasfaserverstärktes Polyamid 66 und/oder ein glasfaserverstärktes Polyamid 6. Der Anteil der Glasfaser kann variabel sein. Ein solches Material hat sich als besonders formstabil erachtet.

Erfindungsgemäß ist das Druckablassventil ein Überdruckventil. Ein solches Überdruckventil ist dazu ausgebildet, bei einem Druck von maximal 6 bar, insbesondere maximal 3 bar, automatisch überschüssige Luft abzulassen. Vorteilhafterweise kann der Benutzer den Fahrzeugreifen aufpumpen, ohne auf den maximalen Druck zu achten. Die Regulierung erfolgt somit automatisch. Denkbar ist auch, dass das Überdruckventil zusätzlich manuell betätigbar ist, sodass neben der Funktion der automatischen Regulierung des maximalen Drucks, auch eine manuelle Regulierung durch den Benutzer möglich ist. Vorteilhaft ist, dass die Druckluft jederzeit regulierbar ist und zusätzlich eine Absicherung bezüglich einer Maximalgrenze vorliegt. Insgesamt wird dadurch die Sicherheit der Vorrichtung verbessert.

Die Aufgabe der Erfindung wird außerdem durch ein Pannenhilfeset zum Abdichten und Aufpumpen von Fahrzeugreifen gelöst, umfassend einen Kompressor zum Erzeugen von Druckluft, wobei das Pannenhilfeset eine beschriebene Vorrichtung zur Regulierung der Druckluft in einem Fahrzeugreifen umfasst.

Eine solches Pannenhilfeset ist vorteilhaft, da das Gehäuse mit dem Kompressor kleiner und kostengünstiger herstellbar ist. Einige Pannenhilfesets müssen nach dem Gebrauch ausgetauscht werden. Vorteilhaft des erfindungsgemäßen Pannenhilfesets ist, dass die Vorrichtung umfassend eine Druckablasseinrichtung wiederverwendbar ist.

Die obigen Ausführungen und Merkmale bezüglich der Vorrichtung gelten ebenfalls für das Pannenhilfesets.

Ferner betrifft die Erfindung die Verwendung einer beschriebenen Vorrichtung zum Regulieren der Druckluft in einem Fahrzeugreifen und/oder eines beschriebenen Pannenhilfesets zum Abdichten und Aufpumpen von Fahrzeugreifen, insbesondere im Fall einer Panne eines Fahrzeugreifens.

Die Aufgabe der Erfindung wird auch durch ein Verfahren zum Regulieren der Druckluft in einem Fahrzeugreifen nach Anspruch 10 gelöst.

Vorteilhafterweise kann die Druckluft durch das erfindungsgemäße Verfahren einfach durch einen Benutzer reguliert werden. Denkbar ist ebenfalls, dass die Druckluft nicht nur im Falle einer Panne regulierbar ist. Der Einsatz bei Fahrradreifen oder anderen aufblasbaren Gegenständen ist auch denkbar, sodass die Luft einfach abgelassen werden kann.

Weitere Vorteile und Merkmale der erfindungsgemäßen Vorrichtung sowie des erfindungsgemäßen Pannenhilfesets sowie des Verfahrens ergeben sich aus den Unteransprüchen, die sich auf vorteilhafte Ausgestaltungen der vorliegenden Erfindung beziehen und als solche nicht einschränkend zu verstehen sind. Von der Erfindung mit umfasst sind auch Kombinationen der Merkmale verschiedener Unteransprüche, soweit diese technisch möglich sind, auch wenn sich die Unteransprüche nicht aufeinander beziehen oder wenn diese verschiedenen Anspruchskategorien zugehören. Ferner sind auch Kombinationen von bevorzugten und besonders bevorzugten Ausführungsformen untereinander miteinander kombinierbar, soweit diese technisch möglich sind. Dies gilt auch für die einzelnen Merkmale des nachfolgenden diskutierten Ausführungsbeispiels, soweit dies nicht für den Fachmann als zwingend zueinander gehörig erkennbar sind.

### Figurenbeschreibung

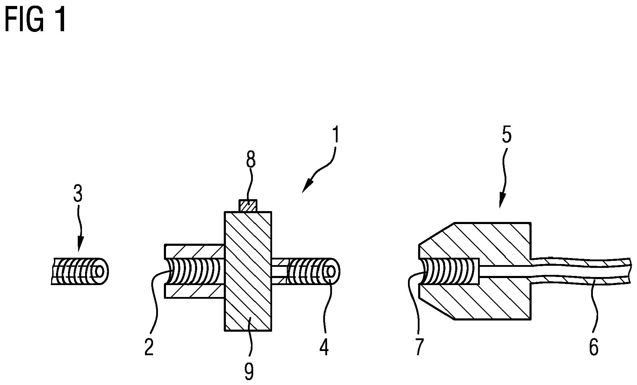

Weitere Einzelheiten und Vorteile der vorliegenden Erfindung ergeben sich aus der nachfolgenden Beschreibung des Ausführungsführungsbeispiels in Verbindung mit der Zeichnung. In dieser zeigt
- Figur 1: eine Ausführungsform der erfindungsgemäßen Vorrichtung in schematischer Seitenansicht.

Figur 1 zeigt eine möglich Ausführungsform der erfindungsgemäßen Vorrichtung 1 umfassend einen ersten Anschluss 2 für ein Reifenventil 3 und einen zweiten Anschluss 4 für einen Reifenverbinder 5 sowie das Reifenventil 3 und den Reifenverbinder 5, der mit einem Schlauch 6 verbunden ist. Der Schlauch 6 sowie der Reifenverbinder 5 sind mittelbar oder unmittelbar mit einem Kompressor verbunden, der die Druckluft erzeugt. Über den Schlauch 6 ist üblicherweise auch Dichtmittel zum Abdichten des Fahrzeugreifens transportierbar. Der Reifenverbinder 5 weist einen dritten Anschluss 7 auf, der sowohl mit dem zweiten Anschluss 4 der Vorrichtung 1 und/oder mit dem Reifenventil 3 verbindbar ist. Der erste Anschluss 2 der erfindungsgemäßen Vorrichtung 1 ist mit dem Reifenventil 3 verbindbar, sodass die Vorrichtung zwischen dem Reifenverbinder 5 und dem Reifenventil 3 anordbar ist. Die Vorrichtung 1 weist ferner einen Druckknopf 8 und ein Druckablassventil 9 auf. Über das manuelle Betätigen des Druckknopfs 8 durch einen Benutzer öffnet sich das Druckablassventil 9, wodurch die Druckluft im Fahrzeugreifen regulierbar ist. Üblicherweise weist das Pannenhilfeset ein Manometer auf, durch welches der Druck im Fahrzeugreifen ablesbar ist.

### Bezugszeichenliste:

- 1: Vorrichtung
- 2: erste Anschluss der Vorrichtung
- 3: Reifenventil
- 4: zweite Anschluss der Vorrichtung
- 5: Reifenverbinder
- 6: Schlauch
- 7: dritte Anschluss des Reifenverbinders
- 8: Druckknopf
- 9: Druckablassventil

## Patentansprüche

1. Vorrichtung (1) zur Regulierung der Druckluft in einem Fahrzeugreifen, insbesondere eine Vorrichtung, welche mit einem Pannenhilfeset verbindbar ist, umfassend einen Grundkörper mit mindestens einem ersten Anschluss (2) für einen Fahrzeugreifen und mindestens einen zweiten Anschluss (4) für ein Pannenhilfeset, wobei der Grundkörper mindestens eine Druckablasseinrichtung zum Regulieren der Druckluft in einem Fahrzeugreifen umfasst,
**dadurch gekennzeichnet, dass** die Druckablasseinrichtung als ein Überdruckventil ausgebildet ist, wobei das Überdruckventil dazu ausgebildet ist, bei einem Druck von maximal 6 bar automatisch überschüssige Luft abzulassen.

2. Vorrichtung (1) nach Anspruch 1, **dadurch gekennzeichnet, dass** die Druckablasseinrichtung ein Druckablassventil (9) umfasst.

3. Vorrichtung (1) nach Anspruch 1 oder 2, **dadurch gekennzeichnet, dass** die Druckablasseinrichtung mindestens ein Druckelement, bevorzugt einen Druckknopf (8), aufweist, durch welches die Druckluft manuell regulierbar ist

4. Vorrichtung (1) nach einem der vorherigen Ansprüche, **dadurch gekennzeichnet, dass** der erste Anschluss (2) so ausgebildet ist, dass dieser mit einem Reifenventil (3) des Fahrzeugreifens verbindbar ist.

5. Vorrichtung (1) nach einem der vorherigen Ansprüche, **dadurch gekennzeichnet, dass** der zweite Anschluss (4) so ausgebildet ist, dass dieser mit einem Reifenverbinder (5) oder einem Schlauch (6) eines Pannenhilfesets verbindbar ist.

6. Vorrichtung (1) nach einem der vorherigen Ansprüche, **dadurch gekennzeichnet, dass** die Vorrichtung wiederverwendbar ist.

7. Vorrichtung (1) nach einem der vorherigen Ansprüche, **dadurch gekennzeichnet, dass** der Grundkörper Kunststoff, insbesondere Polyamid, umfasst oder aus diesem besteht.

8. Pannenhilfeset zum Abdichten und Aufpumpen von Fahrzeugreifen, umfassend einen Kompressor zum Erzeugen von Druckluft, **dadurch gekennzeichnet, dass** das Pannenhilfeset eine Vorrichtung (1) zur Regulierung der Druckluft in einem Fahrzeugreifen nach einem der Ansprüche 1 bis 7 umfasst.

9. Verwendung einer Vorrichtung (1) zum Regulieren der Druckluft in einem Fahrzeugreifen nach einem der Ansprüche 1 bis 7 und/oder eines Pannenhilfesets zum Abdichten und Aufpumpen von Fahrzeugreifen nach Anspruch 8, insbesondere im Fall einer Panne eines Fahrzeugreifens.

10. Verfahren zum Regulieren der Druckluft in einem Fahrzeugreifen mit einer Vorrichtung (1) nach einem der Ansprüche 1 bis 7 und/oder mit einem Pannenhilfeset nach Anspruch 8, **dadurch gekennzeichnet, dass** die Regulierung der Druckluft im Fahrzeugreifen über eine Druckluftablasseinrichtung erfolgt.

## Claims

1. Device (1) for regulating the compressed air in a vehicle tyre, in particular a device which is connectable to a puncture repair kit, comprising a basic body with at least one first attachment (2) for a vehicle tyre and at least one second attachment (4) for a puncture repair kit, wherein the basic body comprises at least one pressure discharge means for regulating the compressed air in a vehicle tyre, **characterized in that** the pressure discharge means is in the form of a positive pressure valve, the positive pressure valve being designed to discharge excess air automatically at a pressure of at maximum 6 bar.

2. Device (1) according to Claim 1, **characterized in that** the pressure discharge means comprises a pressure discharge valve (9).

3. Device (1) according to Claim 1 or 2, **characterized in that** the pressure discharge means has at least one pressure element, preferably a pushbutton (8), by means of which the compressed air can be regulated manually.

4. Device (1) according to one of the preceding claims, **characterized in that** the first attachment (2) is designed in such a manner that it is connectable to a tyre valve (3) of the vehicle tyre.

5. Device (1) according to one of the preceding claims, **characterized in that** the second attachment (4) is designed in such a manner that it is connectable to a tyre connector (5) or a tube (6) of a puncture repair kit.

6. Device (1) according to one of the preceding claims, **characterized in that** the device is reusable.

7. Device (1) according to one of the preceding claims, **characterized in that** the basic body comprises plastic, in particular polyamide, or consists thereof.

8. Puncture repair kit for sealing and pumping up vehicle tyres, comprising a compressor for generating compressed air, **characterized in that** the puncture repair kit has a device (1) for regulating the compressed air in a vehicle tyre according to one of Claims 1 to 7.

9. Use of a device (1) for regulating the compressed air in a vehicle tyre according to one of claims 1 to 7 and/or of a puncture repair kit for sealing and pumping up vehicle tyres according to Claim 8, in particular in the event of a puncture of a vehicle tyre.

10. Method for regulating the compressed air in a vehicle tyre with a device (1) according to one of Claims 1 to 7 and/or with a puncture repair kit according to Claim 8, **characterized in that** the compressed air in the vehicle tyre is regulated via a compressed air discharge means.

## Revendications

1. Dispositif (1) pour réguler de l'air comprimé dans un pneumatique de véhicule, en particulier un dispositif qui est apte à être relié à un kit de dépannage, comprenant un corps de base avec au moins un premier raccord (2) pour un pneumatique de véhicule et au moins un deuxième raccord (4) pour un kit de dépannage, le corps de base comprenant au moins un dispositif de décharge de pression pour réguler de l'air comprimé dans un pneumatique de véhicule, **caractérisé en ce que** le dispositif de décharge de pression est conçu sous la forme d'une soupape de surpression, la soupape de surpression étant conçue de façon à évacuer automatiquement l'air excédentaire à une pression maximale de 6 bars.

2. Dispositif (1) selon la revendication 1, **caractérisé en ce que** le dispositif de décharge de pression comprend une soupape (9) de décharge de pression.

3. Dispositif (1) selon la revendication 1 ou la revendication 2, **caractérisé en ce que** le dispositif de décharge de pression présente au moins un élément de pression, de préférence un bouton-poussoir (8), par lequel l'air comprimé est apte à être régulé manuellement.

4. Dispositif (1) selon l'une des revendications précédentes, **caractérisé en ce que** le premier raccord (2) est conçu de telle sorte qu'il est apte à être relié à une valve (3) du pneumatique de véhicule.

5. Dispositif (1) selon l'une des revendications précédentes, **caractérisé en ce que** le deuxième raccord (4) est conçu de façon à être apte à être relié à un connecteur de pneumatique (5) ou à une chambre à air (6) d'un kit de dépannage.

6. Dispositif (1) selon l'une des revendications précédentes, **caractérisé en ce que** le dispositif est réutilisable.

7. Dispositif (1) selon l'une des revendications précédentes, **caractérisé en ce que** le corps de base comprend ou est constitué de matière plastique, notamment de polyamide.

8. Kit de dépannage pour l'étanchéité et le gonflage de pneumatiques de véhicules, comprenant un compresseur pour générer de l'air comprimé, **caractérisé en ce que** le kit de dépannage comprend un dispositif (1) de régulation de l'air comprimé dans un pneumatique de véhicule selon l'une des revendications 1 à 7.

9. Utilisation d'un dispositif (1) pour réguler de l'air comprimé dans un pneumatique de véhicule selon l'une des revendications 1 à 7 et/ou d'un kit de dépannage pour l'étanchéité et le gonflage de pneumatiques de véhicules selon la revendication 8, notamment en cas de crevaison d'un pneumatique de véhicule.

10. Procédé de régulation de l'air comprimé dans un pneumatique de véhicule comprenant un dispositif (1) selon l'une des revendications 1 à 7 et/ou comprenant un kit de dépannage selon la revendication 8, **caractérisé en ce que** la régulation de l'air comprimé dans le pneumatique du véhicule est réalisée par l'intermédiaire d'un dispositif de décharge de pression.
